# EUROPÄISCHE PATENTSCHRIFT

(11) **EP 3 848 770 B1**
(45) Veröffentlichungstag und Bekanntmachung des Hinweises auf die Patenterteilung: **27.07.2022**
(21) Anmeldenummer: 21150448.5
(22) Anmeldetag: 07.01.2021
(51) Int. Cl.: G05D 1/02

(54) **VERFAHREN ZUM BETRIEB EINES SYSTEMS MIT ZWEI SICH SELBSTTÄTIG FORTBEWEGENDEN BODENBEARBEITUNGSGERÄTEN SOWIE SYSTEM ZUR DURCHFÜHRUNG EINES SOLCHEN VERFAHRENS**
METHOD FOR OPERATING A SYSTEM WITH AT LEAST TWO AUTOMATICALLY MOVING SOIL WORKING DEVICES AND SYSTEM FOR CARRYING OUT SUCH A METHOD
PROCÉDÉ DE FONCTIONNEMENT D'UN SYSTÈME POURVU DE DEUX APPAREILS DE TRAITEMENT DU SOL AUTONOME ET SYSTÈME DESTINÉ À LA MISE EN OEUVRE D'UN TEL PROCÉDÉ

(30) Priorität: 10.01.2020 DE 102020100447
(43) Veröffentlichungstag der Anmeldung: 14.07.2021
(73) Patentinhaber: Vorwerk & Co. Interholding GmbH, 42275 Wuppertal (DE)
(72) Erfinder: Mosebach, Andrej, 59425 Unna (DE); Papenheim, Marc, 42349 Wuppertal (DE); Hayn, Henning, 40723 Hilden (DE)
(74) Vertreter: Müller, Enno

(56) Entgegenhaltungen:
- EP-A1- 3 344 104
- WO-A1-2020/004824
- US-A1- 2003 212 472
- US-A1- 2018 344 114

## Beschreibung

### Gebiet der Technik

Die Erfindung betrifft ein Verfahren zum Betrieb eines Systems mit einem sich selbsttätig fortbewegenden ersten Bodenbearbeitungsgerät und einem sich selbsttätig fortbewegenden zweiten Bodenbearbeitungsgerät, wobei das erste Bodenbearbeitungsgerät Umgebungsmerkmale einer Umgebung des ersten Bodenbearbeitungsgerätes detektiert, wobei das erste Bodenbearbeitungsgerät und das zweite Bodenbearbeitungsgerät Datenkommunikationseinrichtungen aufweisen, mittels welcher die Bodenbearbeitungsgeräte miteinander kommunizieren, wobei das erste Bodenbearbeitungsgerät oder eine dem ersten Bodenbearbeitungsgerät und dem zweiten Bodenbearbeitungsgerät gemeinsam zugeordnete Recheneinrichtung anhand der detektierten Umgebungsmerkmale eine erste Umgebungskarte erstellt, und wobei das erste Bodenbearbeitungsgerät des Weiteren das zweite Bodenbearbeitungsgerät detektiert und die Position des zweiten Bodenbearbeitungsgerätes daraufhin innerhalb der erstellten ersten Umgebungskarte gespeichert wird.

Des Weiteren betrifft die Erfindung ein System mit einem ersten Bodenbearbeitungsgerät und einem zweiten Bodenbearbeitungsgerät zur Durchführung eines Verfahrens der vorgenannten Art.

### Stand der Technik

Systeme mit mehreren sich selbsttätig fortbewegenden Bodenbearbeitungsgeräten, die über ein gemeinsames Kommunikationsnetzwerk oder auch direkt miteinander verbunden sind, sind im Stand der Technik bekannt. Die Bodenbearbeitungsgeräte können beispielsweise Bodenbearbeitungsroboter wie Reinigungsroboter, Polierroboter, Mähroboter oder ähnliches sein. Zumindest eines der Bodenbearbeitungsgeräte verfügt über eine Navigations- und Selbstlokalisierungseinrichtung, welche geeignet ist, eine Umgebungskarte der Umgebung zu erstellen und sich anhand dieser Umgebungskarte zu lokalisieren und fortzubewegen. Des Weiteren ist es im Stand der Technik auch bekannt, dass die Bodenbearbeitungsgeräte auf eine gemeinsame Umgebungskarte zugreifen können, welche in einer externen Speichereinrichtung gespeichert ist.

Die Patentschrift US 6 374 155 B1 offenbart des Weiteren ein System mit mehreren Robotern, von welchen einer der Roboter als Navigationsroboter dient und zumindest ein anderer Roboter Tätigkeiten wie beispielsweise Saugen, Wischen oder ähnliches ausführen kann. Der Navigationsroboter erstellt eine Karte der Umgebung und lokalisiert sich sowie einen oder mehrere Funktionsroboter in der erstellten Umgebungskarte. Anschließend plant der Navigationsroboter Bodenbearbeitungstätigkeiten, die von den Funktionsrobotern ausgeführt werden sollen.

Nachteilig bei dem vorgenannten System bzw. Verfahren ist, dass der Navigationsroboter selbst keine Bodenbearbeitungstätigkeiten ausführt, sondern ausschließlich der Kartenerstellung und Planung von Einsatztätigkeiten für die Funktionsroboter dient. Dadurch ist zur Ausführung des im Stand der Technik bekannten Verfahrens ein zusätzlicher Roboter erforderlich.

Des Weiteren ist aus der EP 3 344 104 A1 ein Verfahren zum Betrieb eines Systems aus einem Masterroboter und einem Slaveroboter bekannt, wobei der Masterroboter Steuerbefehle zur Fortbewegung und Ausführung eines Arbeitsauftrags an den Slaveroboter übermittelt. Daneben beschreiben die Dokumente US 2003/0212472 A1, WO 2020/004824 A1 und US 2018/0344114 A1 den technologischen Hintergrund der Erfindung betreffend Robotersysteme aus einer Mehrzahl von Robotern, die zur Navigation gemeinsame Umgebungskarten nutzen.

### Zusammenfassung der Erfindung

Ausgehend von dem vorgenannten Stand der Technik ist es Aufgabe der Erfindung, ein Verfahren zum Betrieb eines Systems mit mehreren sich selbsttätig fortbewegenden Bodenbearbeitungsgeräten zu schaffen, bei welchem eine ressourcenschonende und zeitsparende Bearbeitung der Umgebung erreicht wird.

Zur Lösung dieser Aufgabe wird vorgeschlagen, dass das erste Bodenbearbeitungsgerät seine bis dahin erstellte erste Umgebungskarte an das zweite Bodenbearbeitungsgerät übermittelt, und wobei das zweite Bodenbearbeitungsgerät noch während einer von dem ersten Bodenbearbeitungsgerät ausgeführten ersten Bodenbearbeitungstätigkeit die erste Umgebungskarte und eine Information über eine aktuelle Position des zweiten Bodenbearbeitungsgerätes innerhalb der ersten Umgebungskarte erhält und wobei eine Recheneinrichtung des zweiten Bodenbearbeitungsgerätes auf der Basis der ersten Umgebungskarte und der empfangenen Information über die aktuelle Position des zweiten Bodenbearbeitungsgerätes innerhalb der ersten Umgebungskarte eine zweite Bodenbearbeitungstätigkeit steuert.

Erfindungsgemäß weist das System zumindest ein sich selbsttätig fortbewegendes Bodenbearbeitungsgerät auf, welches sowohl selbsttätig Bodenbearbeitungstätigkeiten innerhalb der Umgebung ausführen kann, als auch Umgebungsmerkmale der Umgebung sowie eine aktuelle Position zumindest eines anderen Bodenbearbeitungsgerätes detektiert. Anhand der detektierten Umgebungsmerkmale kann eine Umgebungskarte entweder durch das erste Bodenbearbeitungsgerät selbst, oder auch durch eine zentrale Recheneinrichtung erstellt werden, die den Bodenbearbeitungsgeräten des Systems gemeinsam zugeordnet ist. Da das erste Bodenbearbeitungsgerät somit gleichzeitig eine Bodenbearbeitungstätigkeit ausführt und Informationen über aktuelle Positionen anderer Bodenbearbeitungsgeräte detektiert, kann erfindungsgemäß noch während der Bodenbearbeitungstätigkeit des ersten Bodenbearbeitungsgerätes eine zweite Bodenbearbeitungstätigkeit eines zweiten Bodenbearbeitungsgerätes gestartet werden. Dadurch können innerhalb eines vernetzten Systems von Bodenbearbeitungsgeräten die Reinigungstätigkeiten mehrerer Bodenbearbeitungsgeräte sehr schnell aufeinander abgestimmt werden. Insbesondere greifen die mehreren Bodenbearbeitungsgeräte auf dieselbe Umgebungskarte zu, beispielsweise die von dem ersten Bodenbearbeitungsgerät erstellte Umgebungskarte und/oder eine Umgebungskarte, die in einer zentralen Speichereinrichtung hinterlegt ist. Diese Umgebungskarte kann ebenfalls von dem ersten Bodenbearbeitungsgerät erstellt sein, oder auch von einem anderen Bodenbearbeitungsgerät oder der gemeinsamen Recheneinrichtung des Systems erstellt sein. Auf der Basis dieser Umgebungskarte und der empfangenen Positionsinformation steuert dann jedes Bodenbearbeitungsgerät eigenständig seine Fortbewegung und Bodenbearbeitungstätigkeit. Dadurch, dass Bodenbearbeitungstätigkeiten mehrerer Bodenbearbeitungsgeräte zeitlich überlappend stattfinden, kann eine benötigte Zeit für eine Bodenbearbeitung der Umgebung verkürzt werden. Dadurch, dass das zweite Bodenbearbeitungsgerät nicht selbst eine Umgebungskarte erstellen und sich darin lokalisieren muss, sondern zur Navigation benötigte Informationen anhand der bereits erstellten ersten Umgebungskarte erhält, werden Navigations- und Selbstlokalisierungsaufgaben besonders schnell und effizient erledigt.

Besonders vorteilhaft kann das erfindungsgemäße System dort eingesetzt werden, wo zwei Bodenbearbeitungsgeräte sich ergänzende Bodenbearbeitungstätigkeiten in der Umgebung ausführen sollen. Beispielsweise können die Bodenbearbeitungsgeräte zwei verschiedene Umgebungsteilbereiche der Umgebung gleichzeitig reinigen oder denselben Umgebungsteilbereich in zeitlich unmittelbar aufeinanderfolgender Abhängigkeit. Beispielsweise kann das erste Bodenbearbeitungsgerät ein Saugroboter sein, und das zweite Bodenbearbeitungsgerät ein Wischroboter. Für eine optimale Reinigung eines Hartbodens, beispielsweise eines Parkettbodens, Laminatbodens, Fliesenbodens oder dergleichen, folgen vorzugsweise eine Saugreinigung und eine Wischreinigung unmittelbar zeitlich aufeinander. Dabei kann die Wischreinigung des zweiten Bodenbearbeitungsgerätes zeitlich in den Bodenbearbeitungslauf des ersten Bodenbearbeitungsgerätes integriert werden, derart, dass die Wischreinigung gestartet wird, während die Saugreinigung des ersten Bodenbearbeitungsgerätes noch läuft. Das erste Bodenbearbeitungsgerät verfährt örtlich von einem ersten Umgebungsteilbereich zu einem zweiten Umgebungsteilbereich, so dass ein erster, bereits gesaugter Umgebungsteilbereich durch das zweite Bodenbearbeitungsgerät gewischt wird, während das erste Bodenbearbeitungsgerät noch eine Saugaufgabe in einem nächsten, zweiten Umgebungsteilbereich ausführt. Dabei kann vorgesehen sein, dass das zweite Bodenbearbeitungsgerät erst zeitverzögert gestartet wird, falls ein Umgebungsteilbereich, welcher von dem ersten Bodenbearbeitungsgerät derzeit bearbeitet wird bzw. schon bearbeitet ist, eine definierte Mindestgröße noch nicht erreicht. Dies ist insbesondere in dem Fall vorteilhaft, wo das erste Bodenbearbeitungsgerät direkt nach Start einer Bodenbearbeitungstätigkeit bereits ein anderes, zweites Bodenbearbeitungsgerät detektiert und somit zeitlich noch ganz am Anfang der auszuführenden Bodenbearbeitungstätigkeit ist. Gemäß einer Ausführung können in der Umgebungskarte Umgebungsteilbereiche definiert sein, beispielsweise abgegrenzt durch detektierte Wände, Hindernisse, Bodenbeläge und dergleichen, um eine zweite Bodenbearbeitungstätigkeit durch ein zweites Bodenbearbeitungsgerät erst dann zu starten, wenn ein definierter Umgebungsteilbereich mittels des ersten Bodenbearbeitungsgerätes vollständig bearbeitet ist. Das zweite Bodenbearbeitungsgerät kann seine anschließende Bodenbearbeitungstätigkeit an einem Ort des Umgebungsteilbereiches starten, welcher einen kürzesten Abstand zu dem aktuellen Aufenthaltsort des zweiten Bodenbearbeitungsgerätes aufweist. Alternativ ist es auch möglich, dass das zweite Bodenbearbeitungsgerät an dem gleichen Ort startet, an welchem zuvor das erste Bodenbearbeitungsgerät die erste Bodenbearbeitungstätigkeit gestartet hat.

Damit das erste Bodenbearbeitungsgerät ein zweites Bodenbearbeitungsgerät detektieren bzw. identifizieren kann, können die Bodenbearbeitungsgeräte eindeutige Identifizierungscodes aufweisen, anhand welcher diese durch ein oder mehrere andere Bodenbearbeitungsgeräte erkannt werden können. Die in dem System vernetzten Bodenbearbeitungsgeräte besitzen entsprechend korrespondierende Detektionseinrichtungen, mit welchen die Identifizierungscodes ausgelesen werden können. Sofern es sich bei dem Code beispielsweise um einen optischen Code handelt, ist eine korrespondierende optische Detektionseinrichtung notwendig. Gemäß einer Ausführungsform kann das erste Bodenbearbeitungsgerät beispielsweise eine Kamera aufweisen, welche ausgebildet ist, einen QR-Code, Farbcode oder anderen optischen Code eines anderen, zweiten Bodenbearbeitungsgerätes auszulesen. Der Code bzw. die Codes mehrerer Bodenbearbeitungsgeräte können in einer Datenbank gespeichert sein, auf welche sämtliche Bodenbearbeitungsgeräte zugreifen können. Alternativ zu optischen Codes können auch elektronische Tags, beispielsweise auf der Basis von RFID-, NFC-, Bluetooth-Beacons oder anderen, verwendet werden, die eine eindeutige ID des Bodenbearbeitungsgerätes speichern. Die Identifikation von Bodenbearbeitungsgeräten kann durch eine Kommunikation zwischen zwei oder mehreren Bodenbearbeitungsgeräten unterstützt werden. Wenn beispielsweise ein erstes Bodenbearbeitungsgerät ein zweites Bodenbearbeitungsgerät anhand seiner äußeren Gestalt als Bodenbearbeitungsgerät erkennt, kann das erste Bodenbearbeitungsgerät ein Anfragesignal aussenden, welches vorzugsweise alle Bodenbearbeitungsgeräte empfangen können. Dieses Anfragesignal kann eine Aufforderung enthalten, dass das die Anfrage empfangende Bodenbearbeitungsgerät seinerseits die Umgebung detektiert und darin enthaltene Bodenbearbeitungsgeräte sucht. Dasjenige zweite Bodenbearbeitungsgerät, welches ein anderes Bodenbearbeitungsgerät in der von ihm detektierten Umgebung sieht, hat mit großer Wahrscheinlichkeit das erste Bodenbearbeitungsgerät vor sich. Damit kann das erste Bodenbearbeitungsgerät darauf schließen, dass es aktuell das zweite Bodenbearbeitungsgerät detektiert, während das zweite Bodenbearbeitungsgerät darauf schließen kann, dass es aktuell das erste Bodenbearbeitungsgerät detektiert. Des Weiteren können auch bestimmten Bodenbearbeitungsgeräten zugeordnete Basisstationen eine eindeutige Kennung aufweisen. In diesem Fall wird über die identifizierte Basisstation auf die Identität eines Bodenbearbeitungsgerätes in dem Bereich dieser Basisstation geschlossen. Das jeweilige Bodenbearbeitungsgerät detektiert Umgebungsmerkmale innerhalb der Umgebung seiner Basisstation und erstellt eine lokale Umgebungskarte. Wenn nun ein zweites Bodenbearbeitungsgerät eine Basisstation innerhalb dieser Umgebung detektiert, so kann durch einen Vergleich der aktuellen Karteninformationen des zweiten Bodenbearbeitungsgerätes und der Karteninformationen des ersten Bodenbearbeitungsgerätes ein Rückschluss auf die Identität der Basisstation bzw. des in der Nähe anwesenden Bodenbearbeitungsgerätes gezogen werden.

Gemäß einer möglichen Ausführungsform der Erfindung kann vorgesehen sein, dass das erste Bodenbearbeitungsgerät die erste Umgebungskarte erstellt und direkt an das zweite Bodenbearbeitungsgerät übermittelt. Gemäß dieser Ausführungsform ist es nicht zwingend erforderlich, dass die Bodenbearbeitungsgeräte über ein Kommunikationsnetzwerk miteinander verbunden sind, wenngleich die Bodenbearbeitungsgeräte auch Teil eines drahtlosen Kommunikationsnetzwerkes sein können. Das erste Bodenbearbeitungsgerät sendet die erstellte Umgebungskarte somit, beispielsweise ohne Zwischenspeicherung in einem Server, unmittelbar an das zweite Bodenbearbeitungsgerät. Hierzu kann vorteilhaft ein Funksignal von dem ersten Bodenbearbeitungsgerät an das zweite Bodenbearbeitungsgerät übermittelt werden, insbesondere beispielsweise ein Bluetooth-Signal oder ein WLAN-Signal. Wenn das erste Bodenbearbeitungsgerät somit ein zweites Bodenbearbeitungsgerät während einer Bodenbearbeitungstätigkeit detektiert, übermittelt das erste Bodenbearbeitungsgerät seine aktuell erstellte Umgebungskarte mitsamt einer geschätzten Position des zweiten Bodenbearbeitungsgerätes innerhalb der Umgebungskarte an das zweite Bodenbearbeitungsgerät. Das zweite Bodenbearbeitungsgerät empfängt das Signal des ersten Bodenbearbeitungsgerätes und erhält Informationen über seine aktuelle Position bezogen auf die Koordinaten der Umgebungskarte des ersten Bodenbearbeitungsgerätes. Das zweite Bodenbearbeitungsgerät kann seine eigene Bodenbearbeitungstätigkeit daraufhin unmittelbar starten. Mit der Umgebungskarte bzw. in dieser gespeichert können weitere Informationen an das zweite Bodenbearbeitungsgerät übermittelt werden, beispielsweise eine Information darüber, welche Umgebungsteilbereiche der Umgebung bereits durch das erste Bodenbearbeitungsgerät bearbeitet wurden, welche Bodenbeläge, Verschmutzungsparameter oder Verschmutzungsmengen in dem Umgebungsteilbereich vorhanden sind.

Des Weiteren können die erste Umgebungskarte des ersten Bodenbearbeitungsgerätes und die darin vermerkte Position des zweiten Bodenbearbeitungsgerätes während einer Fortbewegung des ersten Bodenbearbeitungsgerätes fortlaufend aktualisiert werden. Gemäß dieser Ausgestaltung wird die Umgebungskarte stets aktuell gehalten, während sich das erste Bodenbearbeitungsgerät innerhalb der Umgebung fortbewegt. Gleichzeitig wird auch die detektierte Position des zweiten Bodenbearbeitungsgerätes aktualisiert, so dass das zweite Bodenbearbeitungsgerät stets Kenntnis darüber hat, wo innerhalb der Umgebungskarte es sich befindet. Es ist somit nicht erforderlich, dass das zweite Bodenbearbeitungsgerät selbst auch über eine Navigations- und Selbstlokalisierungseinrichtung verfügt. In der Umgebungskarte können des Weiteren auch die Bodenbearbeitungsfortschritte eingetragen werden. Vorzugsweise kann ein Nutzer mit einem externen Endgerät beispielsweise auf die erstellte Umgebungskarte zugreifen und diese betrachten. Auf dem Endgerät ist vorzugsweise eine Applikation installiert, welche die Umgebungskarte darstellen kann.

Es wird des Weiteren vorgeschlagen, dass das erste Bodenbearbeitungsgerät Bodenparameter der Umgebungsteilbereiche der Umgebung, einen Bearbeitungszustand mittels des ersten Bodenbearbeitungsgerätes bearbeiteter oder nicht bearbeiteter Umgebungsteilbereiche und/oder eine Fortbewegungsroute des ersten Bodenbearbeitungsgerätes durch einen oder mehrere Umgebungsteilbereiche detektiert und in der ersten Umgebungskarte speichert, oder - alternativ - detektiert und an die gemeinsame Recheneinrichtung übermittelt. Die Bodenparameter der Umgebungsteilbereiche können beispielsweise eine Bodenart, eine Verschmutzungsart und/oder ein Verschmutzungsgrad innerhalb des jeweiligen Umgebungsteilbereiches sein. Als Bodenart können beispielsweise Hartböden und Teppichböden unterschieden werden, insbesondere weiter klassifiziert in niederflorige Teppiche bzw. Teppichböden, hochflorige Teppiche bzw. Teppichböden, Holzböden, Fliesenböden und andere. Eine Verschmutzungsart kann nach der Konsistenz (trocken, flüssig, klebrig, oder andere) oder nach der Zusammensetzung (Fett, Wein, oder andere) eingeteilt werden. Ein Verschmutzungsgrad kann als prozentualer Anteil eines normierten Maximalverschmutzungsgrades definiert werden, wobei beispielsweise ein Verschmutzungsgrad von 100 Prozent eine so definierte maximale Verschmutzung repräsentiert. Es ist des Weiteren möglich, Verschmutzungskategorien festzulegen, beispielsweise leichte Verschmutzung, mittlere Verschmutzung, starke Verschmutzung. Der Verschmutzungsgrad kann einen Belegungsgrad der Fläche des Umgebungsteilbereiches mit Schmutz repräsentieren, eine von dem ersten Bodenbearbeitungsgerät aufgenommene Schmutzmenge pro Flächenbereich oder ähnliches. Anhand der Informationen über Bodenart, Verschmutzungsart und/oder Verschmutzungsgrad kann das zweite Bodenbearbeitungsgerät prüfen, welche Einstellungsparameter für eine erfolgreiche Nachreinigung geeignet sind. Anhand der Information über einen Bearbeitungszustand eines Umgebungsteilbereiches bzw. der Kenntnis, ob ein bestimmter Umgebungsteilbereich auf einer vorhergehenden Fortbewegungsroute des ersten Bodenbearbeitungsgerätes liegt, kann das zweite Bodenbearbeitungsgerät zudem seine eigene Fortbewegungsroute durch die Umgebung planen. Somit sind sämtliche Informationen verfügbar, die das zweite Bodenbearbeitungsgerät benötigt, um eine erfolgreiche Bodenbearbeitung vornehmen zu können. Insbesondere kann eine zweite Bodenbearbeitungstätigkeit an einem Ort auf einer Fortbewegungsroute des ersten Bodenbearbeitungsgerätes durchgeführt werden.

Es wird vorgeschlagen, dass die zweite Bodenbearbeitungstätigkeit des zweiten Bodenbearbeitungsgerätes in einem bestimmten Umgebungsteilbereich erst dann durchgeführt wird, wenn in diesem Umgebungsteilbereich zuvor eine erste Bodenbearbeitungstätigkeit durch das erste Bodenbearbeitungsgerät durchgeführt wurde, und/oder dass die zweite Bodenbearbeitungstätigkeit des zweiten Bodenbearbeitungsgerätes in einem bestimmten Umgebungsteilbereich nur dann durchgeführt wird, wenn das zweite Bodenbearbeitungsgerät für eine Bodenbearbeitung dieses Umgebungsteilbereiches geeignet ist. Durch die erstgenannte Alternative wird einem Umstand Rechnung getragen, bei welchem eine Bodenbearbeitung des zweiten Bodenbearbeitungsgerätes von einer erfolgreichen vorhergehenden Bodenbearbeitung des ersten Bodenbearbeitungsgerätes in demselben Umgebungsteilbereich abhängig ist. Wenn es sich bei dem zweiten Bodenbearbeitungsgerät beispielsweise um einen Feuchtreinigungsroboter handelt, empfiehlt es sich, dass zuvor ein erstes Bodenbearbeitungsgerät eine Saugreinigung vorgenommen hat. Allerdings soll die Bodenbearbeitungstätigkeit des zweiten Bodenbearbeitungsgerätes, in dem vorgeschlagenen Fall die Wischreinigung gemäß der zweitgenannten Alternative, nur dann erfolgen, wenn die Bodenart des betreffenden Umgebungsteilbereiches auch für eine Bodenbearbeitung durch das zweite Bodenbearbeitungsgerät, nämlich hier eine Feuchtreinigung, geeignet ist.

Des Weiteren kann es vorkommen, dass das erste Bodenbearbeitungsgerät bis zu dem Zeitpunkt, zu welchem es ein zweites Bodenbearbeitungsgerät in der Umgebung detektiert, bereits mehr als einen einzigen Umgebungsteilbereich bearbeitet hat. Sofern auf der bereits durchschrittenen Fortbewegungsroute des ersten Bodenbearbeitungsgerätes mehrere Umgebungsteilbereiche für eine Bodenbearbeitung des zweiten Bodenbearbeitungsgerätes geeignet sind, empfiehlt es sich, dass eine Steuereinrichtung des zweiten Bodenbearbeitungsgerätes eine eigene Fortbewegungsroute festlegt, die für eine Bodenbearbeitung durch das zweite Bodenbearbeitungsgerät vorteilhaft ist. In diesem Fall können beispielsweise Entfernungen zwischen Umgebungsteilbereichen ermittelt werden, die für eine Bodenbearbeitung durch das zweite Bodenbearbeitungsgerät geeignet sind. Die Entfernungen werden in unterschiedlichen Kombinationen aufaddiert und eine solche Fortbewegungsroute zur Verbindung der Umgebungsteilbereiche gewählt, die eine geringste Gesamtstreckenlänge aufweist. Damit wird gleichzeitig festgelegt, in welcher Reihenfolge das zweite Bodenbearbeitungsgerät die Umgebungsteilbereiche bearbeitet und wo sich ein Startpunkt und ein Endpunkt der Fortbewegungsroute des zweiten Bodenbearbeitungsgerätes befinden.

Für den Fall, dass das erste Bodenbearbeitungsgerät das zweite Bodenbearbeitungsgerät während der Ausführung der ersten Bodenbearbeitungstätigkeit nicht detektieren konnte, wird vorgeschlagen, dass das erste Bodenbearbeitungsgerät nach Beendigung der ersten Bodenbearbeitungstätigkeit eine Statusnachricht über die beendete erste Bodenbearbeitungstätigkeit an das zweite Bodenbearbeitungsgerät und/oder die gemeinsame Recheneinrichtung übermittelt. In diesem Fall kann das zweite Bodenbearbeitungsgerät keine Informationen über seine Position innerhalb der ersten Umgebungskarte des ersten Bodenbearbeitungsgerätes erlangen. Das zweite Bodenbearbeitungsgerät muss somit selbst eine Kartenerstellung und Selbstlokalisierung vornehmen. Das erste Bodenbearbeitungsgerät übermittelt jedoch eine Statusnachricht an das zweite Bodenbearbeitungsgerät bzw. eine gemeinsame Recheneinrichtung, um dem zweiten Bodenbearbeitungsgerät beispielsweise mitzuteilen, in welchen Umgebungsteilbereichen der Umgebung bereits eine Bodenbearbeitung durch das erste Bodenbearbeitungsgerät erfolgt ist. Die Statusnachricht kann auf Umgebungsteilbereiche verweisen, die in einer Umgebungskarte des ersten Bodenbearbeitungsgerätes gespeichert sind. Eine Übermittlung der Statusnachricht an das zweite Bodenbearbeitungsgerät kann erfolgen, sobald das erste Bodenbearbeitungsgerät das zweite Bodenbearbeitungsgerät detektiert hat. Wenn das erste Bodenbearbeitungsgerät das zweite Bodenbearbeitungsgerät somit während der Ausführung der ersten Bodenbearbeitungstätigkeit nicht detektiert, beendet das erste Bodenbearbeitungsgerät zunächst die erste Bodenbearbeitungstätigkeit und übermittelt dann später Informationen und/oder eine Aufforderung zu einer nachfolgenden zweiten Bodenbearbeitungstätigkeit an das zweite Bodenbearbeitungsgerät. Das zweite Bodenbearbeitungsgerät führt anschließend gemäß einer möglichen Ausführungsform zunächst einen Standardbearbeitungsmodus ohne Zugriff auf eine bereits gespeicherte Umgebungskarte aus. Während der Ausführung der Bodenbearbeitungstätigkeit erstellt das zweite Bodenbearbeitungsgerät vorteilhaft eine eigene Umgebungskarte, indem von einer eigenen Detektionseinrichtung des zweiten Bodenbearbeitungsgerätes detektierte Detektionsergebnisse benutzt werden.

In diesem Sinne wird vorgeschlagen, dass das zweite Bodenbearbeitungsgerät die Statusnachricht des ersten Bodenbearbeitungsgerätes empfängt und daraufhin eine zweite Bodenbearbeitungstätigkeit startet. Vorzugsweise detektiert das zweite Bodenbearbeitungsgerät dann selbst Umgebungsmerkmale der Umgebung, erstellt anhand der detektieren Umgebungsmerkmale eine zweite Umgebungskarte und führt die zweite Bodenbearbeitungstätigkeit auf der Basis der zweiten Umgebungskarte aus.

Neben dem zuvor beschriebenen Verfahren zum Betrieb eines Systems wird mit der Erfindung auch ein System mit einem ersten Bodenbearbeitungsgerät und einem zweiten Bodenbearbeitungsgerät vorgeschlagen, welches zur Durchführung eines zuvor beschriebenen Verfahrens ausgebildet ist. Die zuvor in Bezug auf das Verfahren beschriebenen Merkmale und Vorteile ergeben sich somit entsprechend auch für das erfindungsgemäße System. Zur Vermeidung von Wiederholungen wird auf die vorhergehenden Ausführungen verwiesen.

### Kurze Beschreibung der Zeichnungen

Im Folgenden wird die Erfindung anhand von Ausführungsbeispielen näher erläutert. Es zeigen:
- Fig. 1: ein System mit einem ersten Bodenbearbeitungsgerät und einem zweiten Bodenbearbeitungsgerät gemäß einer ersten Ausführungsform,
- Fig. 2: eine skizzierte Umgebung der Bodenbearbeitungsgeräte mit Übermittlung einer von dem ersten Bodenbearbeitungsgerät erstellten Umgebungskarte an das zweite Bodenbearbeitungsgerät,
- Fig. 3: die in Fig. 2 dargestellte Umgebung mit einer Fortbewegungsroute des zweiten Bodenbearbeitungsgerätes anhand einer modifizierten Umgebungskarte,
- Fig. 4: ein System mit zwei Bodenbearbeitungsgeräten und einer diesen gemeinsam zugeordneten Recheneinrichtung gemäß einer weiteren Ausführungsform.

### Beschreibung der Ausführungsformen

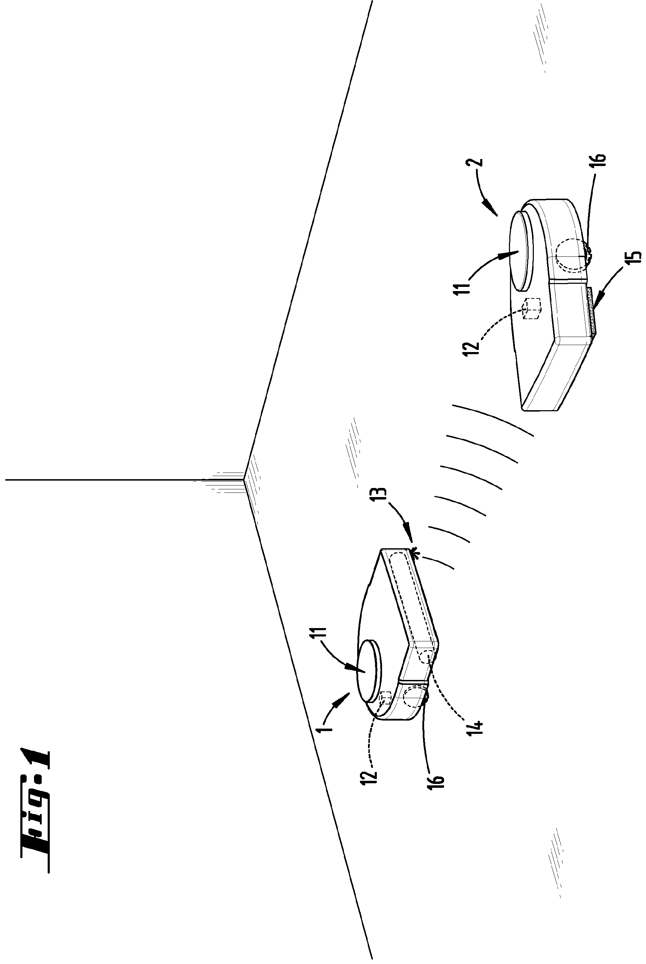

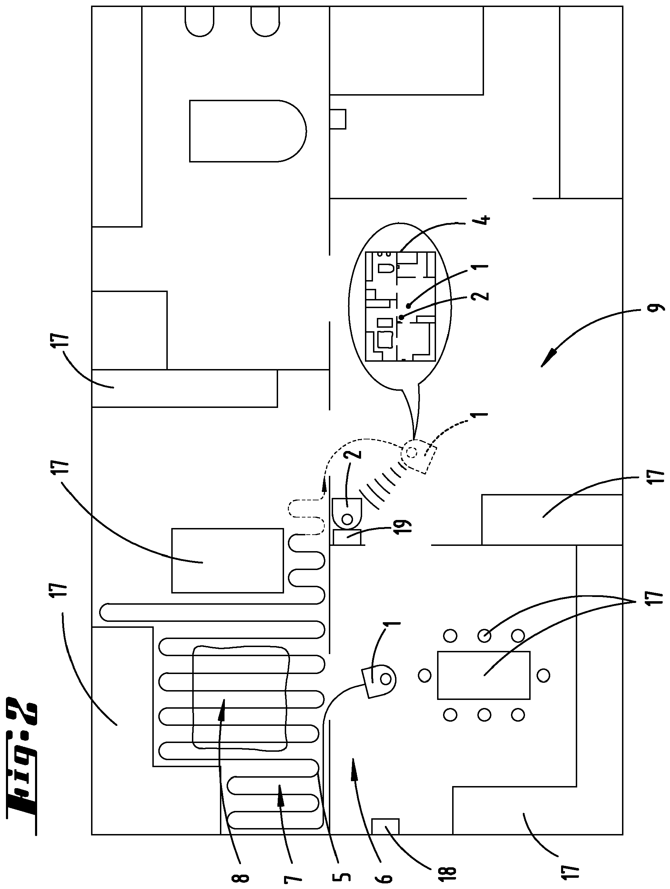

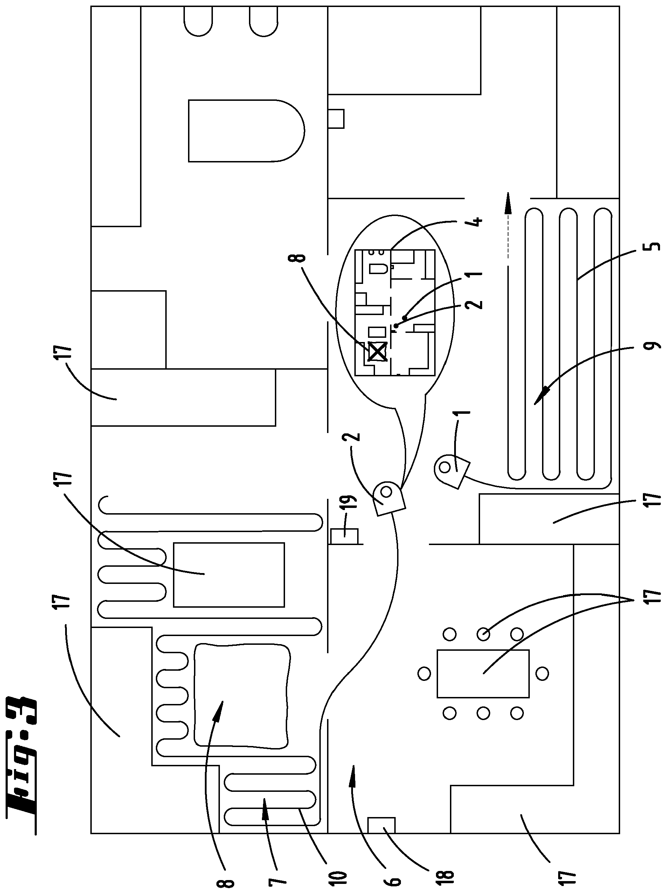

Figur 1 zeigt zunächst ein erfindungsgemäßes System mit zwei Bodenbearbeitungsgeräten 1, 2, nämlich einem ersten Bodenbearbeitungsgerät 1 und einem zweiten Bodenbearbeitungsgerät 2. Die Bodenbearbeitungsgeräte 1, 2 sind als sich selbsttätig fortbewegende Reinigungsroboter ausgebildet und verfügen jeweils über angetriebene Räder 16 zur Fortbewegung des Bodenbearbeitungsgerätes 1, 2 innerhalb einer skizziert angedeuteten Umgebung, beispielsweise einer Wohnung. Des Weiteren weisen die Bodenbearbeitungsgeräte 1, 2 je nach Gerätetyp unterschiedliche Bodenbearbeitungselemente 13, 14, 15 auf. Das erste Bodenbearbeitungsgerät 1 ist hier beispielsweise als Saugroboter ausgebildet und verfügt über eine um eine horizontale Achse rotierende Borstenwalze (Bodenbearbeitungselement 14) sowie eine Seitenbürste (Bodenbearbeitungselement 13), welche über einen Grundriss des Gehäuses des Bodenbearbeitungsgerätes 1 hinausragt und um eine im Wesentlichen vertikale Achse rotieren kann. Das zweite Bodenbearbeitungsgerät 2 ist hier beispielsweise als Wischroboter ausgebildet und verfügt über eine Wischplatte (Bodenbearbeitungselement 15). Des Weiteren hat jedes der Bodenbearbeitungsgeräte 1, 2 eine Detektionseinrichtung 11 zur Detektion von Hindernissen 17 innerhalb der Umgebung. Bei den Hindernissen 17 kann es sich wie in den Figuren 2 und 3 gezeigt um Möbelstücke, Wände oder auch andere Objekte innerhalb der Umgebung handeln. Die Detektionseinrichtung 11 ist hier beispielsweise ein Laserscanner, welcher nach dem Triangulationsprinzip arbeitet. Eine nicht dargestellte Laserquelle emittiert beispielsweise einen Laserstrahl, welcher über optische Elemente so umgeleitet wird, dass der Laserstrahl das Bodenbearbeitungsgerät 1, 2 im Wesentlichen parallel zu einer zu bearbeitenden Fläche verlässt. Durch die Anordnung der Laserquelle oder auch zugeordneter Umlenkelemente auf einem Drehteller kann beispielsweise eine 360°-Messung um das Bodenbearbeitungsgerät 1, 2 herum erreicht werden. Jedes der Bodenbearbeitungsgeräte 1, 2 weist hier des Weiteren eine Recheneinrichtung 12 auf, welche die von der Detektionseinrichtung 11 detektierten Abstandswerte zu Hindernissen 17 zu einer Umgebungskarte 4 verarbeitet. Anhand der Umgebungskarte 4, welche einen Grundriss der Umgebung sowie darin enthaltene Hindernisse 17 darstellt, kann eine Fortbewegungsroute 5, 10 des ersten bzw. zweiten Bodenbearbeitungsgerätes 1, 2 geplant werden.

Obwohl in den gezeigten Ausführungsbeispielen beide Bodenbearbeitungsgeräte 1, 2 über eine Detektionseinrichtung 11 sowie eine Recheneinrichtung 12 zur Erstellung einer Umgebungskarte 4 verfügen, kann eine besondere Ausführungsform der Erfindung vorsehen, dass beispielsweise nur das erste Bodenbearbeitungsgerät 1 über eine solche Detektionseinrichtung 11 verfügt, während sich das zweite Bodenbearbeitungsgerät 2 anhand der von dem ersten Bodenbearbeitungsgerät 1 erstellten und übermittelten Umgebungskarte innerhalb der Umgebung orientiert.

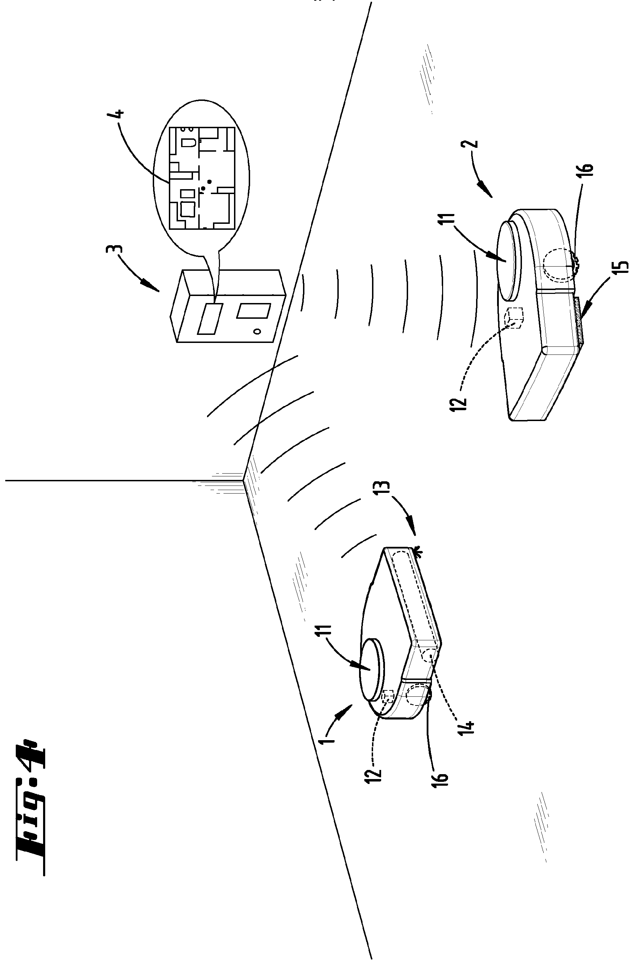

Des Weiteren verfügen die Bodenbearbeitungsgeräte 1, 2 über nicht dargestellte Datenkommunikationseinrichtungen, beispielsweise WLAN oder Bluetooth-Funkmodule, mittels welcher die Bodenbearbeitungsgeräte 1, 2 miteinander oder auch mit einer externen Recheneinrichtung 3 (siehe Figur 4) kommunizieren können. Das System mit den dargestellten zwei oder auch mehr Bodenbearbeitungsgeräten 1, 2 kann vorteilhaft ein drahtloses Kommunikationsnetzwerk, insbesondere ein sogenanntes Smart Home Netzwerk, aufweisen. Das Netzwerk kann neben den Bodenbearbeitungsgeräten 1, 2 sowie einer Recheneinrichtung 3 auch weitere Geräte, beispielsweise andere Haushaltsgeräte und/oder Computer, beinhalten. Insbesondere kann auch eine Kommunikationsverbindung zu einem mobilen Kommunikationsgerät, wie beispielsweise einem Smartphone, einem Tablet-PC oder anderen, bestehen. Auf dem mobilen Kommunikationsgerät kann eine Applikation installiert sein, mittels welcher ein Nutzer des Systems eines oder mehrere Bodenbearbeitungsgeräte 1, 2 steuern kann, deren Umgebungskarte 4 einsehen oder verändern kann oder anderes.

Die Figuren 2 und 3 zeigen im Folgenden eine Arbeitsweise der Bodenbearbeitungsgeräte 1, 2, bei welcher eine in Figur 1 dargestellte direkte Kommunikation zwischen den Bodenbearbeitungsgeräten 1, 2 genutzt wird, um eine Umgebungskarte 4 des ersten Bodenbearbeitungsgerätes 1 an das zweite Bodenbearbeitungsgerät 2 zu übermitteln.

Figur 2 zeigt einen Grundriss einer Wohnung, innerhalb welcher sich die beiden Bodenbearbeitungsgeräte 1, 2 befinden. Die Wohnung verfügt über eine Mehrzahl von Umgebungsteilbereichen 6, 7, 8, 9, von welchen die Umgebungsteilbereiche 6, 9 Räume der Wohnung sind und die Umgebungsteilbereiche 7, 8 verschiedene Bereiche eines Raumes, nämlich ein Teppich (Umgebungsteilbereich 8), welcher nur von dem ersten Bodenbearbeitungsgerät 1 gereinigt werden soll, und der übrige Bereich (Umgebungsteilbereich 9) des Raumes neben dem Teppich. Umgebungsteilbereiche 6, 7, 8, 9 können im Prinzip nach Belieben durch einen Nutzer des Systems definiert werden, insbesondere über die zuvor erwähnte Applikation, oder auch automatisch durch eine Recheneinrichtung 12 eines Bodenbearbeitungsgerätes 1, 2 festgelegt werden. In der dargestellten Umgebung befinden sich des Weiteren Basisstationen 18, 19, nämlich eine erste Basisstation 18 für das erste Bodenbearbeitungsgerät 1 und eine zweite Basisstation 19 für das zweite Bodenbearbeitungsgerät 2. Die erste Basisstation 18 befindet sich in einem ersten Umgebungsteilbereich 6 der Wohnung, während sich die zweite Basisstation 19 hier in einem anderen Umgebungsteilbereich 9 befindet. Die Bodenbearbeitungsgeräte 1, 2 und vorzugsweise auch die Basisstationen 18, 19 verfügen über einen eindeutigen Identifikationscode, über welchen diese von anderen Bodenbearbeitungsgeräten 1, 2 mittels einer entsprechenden Einrichtung identifiziert werden können. Der Identifikationscode kann beispielsweise ein optischer Code, wie ein Barcode, QR-Code oder ähnliches sein. Des Weiteren können auch elektronische Tags genutzt werden, die einen identifizierbaren Code beinhalten. Solche Tags können beispielsweise RFID-Tags, NFC-Tags oder Bluetooth Beacons sein. Wesentlich ist, dass der Identifikationscode ein Bodenbearbeitungsgerät 1, 2 bzw. eine Basisstation 18, 19 eindeutig identifiziert und von entsprechenden Detektionseinrichtungen ausgelesen werden kann. Die Identifikationscodes sind vorzugsweise in einer den Bodenbearbeitungsgeräten 1, 2 bzw. Basisstationen 18, 19 gemeinsamen Speichereinrichtung hinterlegt. Des Weiteren verfügen die Bodenbearbeitungsgeräte 1, 2 über eine oder mehrere Sensoreinrichtungen zur Detektion einer in den Umgebungsteilbereichen 6, 7, 8, 9 vorkommenden Bodenart, einer Verschmutzungsart und/oder einem Verschmutzungsgrad eines Umgebungsteilbereiches 6, 7, 8, 9. Bei der Bodenart kann beispielsweise zwischen Bodentypen wie Teppich bzw. Teppichboden und Hartboden unterschieden werden. Zu den Hartböden zählen beispielsweise Laminat, Fliesen und Parkett. Die Einrichtungen zur Detektion der Bodenart, der Verschmutzungsart bzw. des Verschmutzungsgrades können beispielsweise optische oder mechanische Detektionseinrichtungen sein. Beispielsweise kann eine Kamera mit einem Bildverarbeitungsprogramm zur Anwendung kommen, welches geeignet ist, eine Bodenart, Verschmutzungsart bzw. einen Verschmutzungsgrad zu identifizieren. Bei der Verschmutzungsart kann es sich beispielsweise um Verschmutzungen unterschiedlicher Konsistenz handeln, beispielsweise flüssig, fest, klebrig oder ähnliches. Der Verschmutzungsgrad bezeichnet eine Stärke der Verschmutzung, beispielsweise eingeteilt in Kategorien wie niedrig, mittel, hoch. Des Weiteren kann ein Verschmutzungsgrad auch als Prozentsatz einer maximal möglichen Verschmutzung angegeben werden, als eine Schmutzpartikelkonzentration pro definiertem Flächenteilbereich oder ähnliches.

Ein mögliches Ausführungsbeispiel wird nun anhand der Figuren 2 und 3 näher erläutert. Das erste Bodenbearbeitungsgerät 1 startet eine Fahrt zur Bodenbearbeitung, beispielsweise ausgehend von seiner Basisstation 18, und verfolgt eine Fortbewegungsroute 5, die die Umgebungsteilbereiche 6, 7, 8, 9 mäanderförmig durchzieht, unter Aussparung solcher Gebiete, welche nichtunterfahrbare Hindernisse 17 aufweisen. Der in dem Umgebungsteilbereich 8 vorhandene Teppich kann von dem Bodenbearbeitungsgerät 1 ebenfalls überquert und gereinigt werden. Zum Startzeitpunkt der Fortbewegung des ersten Bodenbearbeitungsgerätes 1 besteht hier beispielsweise noch keine Umgebungskarte 4. Vielmehr erstellt sich das erste Bodenbearbeitungsgerät 1 selbst eine Umgebungskarte 4. Dazu detektiert die Detektionseinrichtung 11 des ersten Bodenbearbeitungsgerätes 1 Abstände zu Hindernissen 17, unter anderem auch Raumbegrenzungen, innerhalb der Umgebung des ersten Bodenbearbeitungsgerätes 1. Die Umgebungskarte 4 enthält einen Grundriss mit den darin detektierten Hindernissen 17. Die Fortbewegung des ersten Bodenbearbeitungsgerätes 1 entlang der Fortbewegungsroute 5 und die Erstellung der Umgebungskarte 4 erfolgen zeitgleich, so dass die Umgebungskarte 4 fortlaufend aktualisiert und erweitert wird, je weiter das erste Bodenbearbeitungsgerät 1 entlang der Fortbewegungsroute 5 schreitet. Gleichzeitig mit der Fortbewegung kann eine entsprechende Sensorik des Bodenbearbeitungsgerätes 1 eine Bodenart, einen Verschmutzungsgrad und/oder eine Verschmutzungsart eines oder mehrerer Umgebungsteilbereiche 6, 7, 8, 9 erkennen und direkt in die Umgebungskarte 4 eintragen, nämlich dem jeweiligen Umgebungsteilbereich 6, 7, 8, 9 zuordnen. Das erste Bodenbearbeitungsgerät 1 ist des Weiteren ausgebildet, sich innerhalb der erstellten Umgebungskarte 4 selbst zu lokalisieren, d. h. seine eigene Position und Orientierung innerhalb der Umgebung festzustellen.

Sobald das erste Bodenbearbeitungsgerät 1 das zweite Bodenbearbeitungsgerät 2 detektiert, wird die Position des zweiten Bodenbearbeitungsgerätes 2 innerhalb der Umgebungskarte 4 des ersten Bodenbearbeitungsgerätes 1 vermerkt. Das erste Bodenbearbeitungsgerät 1 identifiziert das zweite Bodenbearbeitungsgerät 2 anhand dessen eindeutiger Kennung, nämlich beispielsweise einem auf dem Gehäuse des zweiten Bodenbearbeitungsgerätes 2 aufgebrachten QR-Code, und stellt durch einen Vergleich mit in einer Datenbank hinterlegten Identifikationscodes verschiedener Bodenbearbeitungsgeräte 1, 2 dessen Identität eindeutig fest. Das eindeutige Identifizieren des zweiten Bodenbearbeitungsgerätes 2 durch das erste Bodenbearbeitungsgerät 1 kann des Weiteren auch durch eine Kommunikation zwischen den beiden Bodenbearbeitungsgeräten 1, 2 unterstützt werden. Wenn das erste Bodenbearbeitungsgerät 1 das zweite Bodenbearbeitungsgerät 2 anhand dessen äußerer Gestaltung als ein Bodenbearbeitungsgerät 1, 2 erkennt, kann das erste Bodenbearbeitungsgerät 1 ein Anfragesignal in die Umgebung aussenden. Dieses Anfragesignal kann eine Aufforderung an andere Bodenbearbeitungsgeräte 1, 2 enthalten, sich in der Umgebung umzuschauen und ebenfalls nach Bodenbearbeitungsgeräten 1, 2 zu suchen. Dasjenige Bodenbearbeitungsgerät 2, welches dann ein Bodenbearbeitungsgerät 1 in seiner Umgebung findet, hat mit großer Wahrscheinlichkeit das erste Bodenbearbeitungsgerät 1 detektiert. Damit wissen beide Bodenbearbeitungsgeräte 1, 2, welches andere Bodenbearbeitungsgerät 1, 2 sich in ihrer Umgebung befindet.

Des Weiteren kann auch anhand der Identifikation einer zu einem bestimmten Bodenbearbeitungsgerät 1, 2 gehörenden Basisstation 18, 19 ein Rückschluss auf das korrespondierende Bodenbearbeitungsgerät 1, 2 erfolgen. Hier kann das erste Bodenbearbeitungsgerät 1 in dem Umgebungsteilbereich 9 beispielsweise die Basisstation 19 des zweiten Bodenbearbeitungsgerätes 2 detektieren und diese anhand eines auf der Basisstation 19 angeordneten Identifikationscodes erkennen. Wenn das zweite Bodenbearbeitungsgerät 2 seinerseits eine lokale Umgebungskarte 4 erstellt hat, kann durch einen Vergleich der lokalen Umgebungskarten 4 des zweiten Bodenbearbeitungsgerätes 2 und des ersten Bodenbearbeitungsgerätes 1 festgestellt werden, um welche Basisstation 18, 19 es sich handelt.

Das erste Bodenbearbeitungsgerät 1 detektiert nun, wie in Figur 2 dargestellt, das in dem Umgebungsteilbereich 9 anwesende zweite Bodenbearbeitungsgerät 2 und übermittelt seine bis dahin erstellte Umgebungskarte 4 an das zweite Bodenbearbeitungsgerät 2. Die Umgebungskarte 4 beinhaltet eine geschätzte Position des zweiten Bodenbearbeitungsgerätes 2. Anhand der empfangenen Umgebungskarte 4 hat das zweite Bodenbearbeitungsgerät 2 Kenntnis über seine aktuelle Position in der Umgebungskarte 4 des ersten Bodenbearbeitungsgerätes 1, d. h. in den Koordinaten des ersten Bodenbearbeitungsgerätes 1, Informationen über gereinigte Bereiche auf der Fortbewegungsroute 5 des ersten Bodenbearbeitungsgerätes 1 und Informationen über in den Umgebungsteilbereichen 6, 7, 8, 9 vertretene Bodenarten, beispielsweise auch darüber, dass in dem Umgebungsteilbereich 8 ein Teppich liegt, welcher nicht von dem zweiten Bodenbearbeitungsgerät 2 gereinigt werden kann und somit auch nicht befahren werden soll. Die Übermittlung der Umgebungskarte 4 an das zweite Bodenbearbeitungsgerät 2 erfolgt bei dem Ausführungsbeispiel gemäß den Figuren 1 bis 3 unmittelbar per drahtloser Kommunikation, ohne Zwischenübermittlung an beispielsweise ein externes Endgerät, einen Server oder dergleichen. Anhand der Umgebungskarte 4 sind dem zweiten Bodenbearbeitungsgerät 2 die von dem ersten Bodenbearbeitungsgerät 1 gesammelten Informationen über eine Bodenart, eine Verschmutzungsart und/oder einen Verschmutzungsgrad bekannt. Des Weiteren hat das zweite Bodenbearbeitungsgerät 2 Kenntnis über die zurückgelegte Fortbewegungsroute 5 des ersten Bodenbearbeitungsgerätes 1. Die Recheneinrichtung 12 des zweiten Bodenbearbeitungsgerätes 2 kann die Umgebungskarte 4 lokal abspeichern und eine eigene Fortbewegungsroute 10 für das zweite Bodenbearbeitungsgerät 2 planen, die hier beispielsweise den Umgebungsteilbereich 8 ausspart, welcher den Teppich enthält.

Während der Übertragung der Umgebungskarte 4 von dem ersten Bodenbearbeitungsgerät 1 an das zweite Bodenbearbeitungsgerät 2 sowie auch bei Start einer Bodenbearbeitungstätigkeit durch das zweite Bodenbearbeitungsgerät 2 setzt das erste Bodenbearbeitungsgerät 1 seine Bodenbearbeitungstätigkeit und Fortbewegung fort, d. h. die Bodenbearbeitung des zweiten Bodenbearbeitungsgerätes 2 wird gestartet noch während das erste Bodenbearbeitungsgerät 1 seine Bodenbearbeitungstätigkeit ausführt. Dadurch können sich die Bodenbearbeitungstätigkeiten vorteilhaft ergänzen und zeitsparend durchgeführt werden, da das zweite Bodenbearbeitungsgerät 2 nicht warten muss bis das erste Bodenbearbeitungsgerät 1 seine Bodenbearbeitungstätigkeit beendet hat. Das zweite Bodenbearbeitungsgerät 2 fährt diejenigen Umgebungsteilbereiche 6, 7, 9 an, die sich auf der Fortbewegungsroute 5 des ersten Bodenbearbeitungsgerätes 1 befinden und Bodenarten aufweisen, die durch das zweite Bodenbearbeitungsgerät 2 gereinigt werden können bzw. gereinigt werden sollen. Der den Teppich aufweisende Umgebungsteilbereich 8 wird somit nicht in die Fortbewegungsroute 10 des zweiten Bodenbearbeitungsgerätes 2 integriert. Während seiner weiteren Fortbewegung entlang der Fortbewegungsroute 5 detektiert das erste Bodenbearbeitungsgerät 1 weiterhin Hindernisse 17 innerhalb der Umgebung und erweitert bzw. aktualisiert seine Umgebungskarte 4, die vorzugsweise fortlaufend dann auch wiederum dem zweiten Bodenbearbeitungsgerät 2 zur Verfügung gestellt wird. Ein Nutzer des Systems kann sich beispielsweise die Fortschritte der Bodenbearbeitungstätigkeiten beider Bodenbearbeitungsgeräte 1, 2 auf einem externen Endgerät, beispielsweise einem Mobiltelefon, anzeigen lassen.

Die Planung der Fortbewegungsroute 10 des zweiten Bodenbearbeitungsgerätes 2 kann zusätzlich zu den in Anspruch 1 genannten Voraussetzungen an weitere definierte Bedingungen geknüpft sein. Wenn das erste Bodenbearbeitungsgerät 1 beispielsweise noch keinen Hartboden gereinigt hat, bevor das erste Bodenbearbeitungsgerät 1 das zweite Bodenbearbeitungsgerät 2 detektiert hat, wird das zweite Bodenbearbeitungsgerät 2, nämlich hier der Wischroboter, nicht aktiviert, da dieses nur für Hartbodenbearbeitungen geeignet ist. Die durch das erste Bodenbearbeitungsgerät 1 detektierte Position des zweiten Bodenbearbeitungsgerätes 2 wird jedoch innerhalb der Umgebungskarte 4 vermerkt. Sobald das erste Bodenbearbeitungsgerät 1 daraufhin einen Hartboden detektiert und reinigt, wird dies in der Umgebungskarte 4 vermerkt bzw. ein entsprechender Hinweis an das zweite Bodenbearbeitungsgerät 2 übermittelt, so dass die Recheneinrichtung 12 des zweiten Bodenbearbeitungsgerätes 2 eine Reinigung durch das Bodenbearbeitungsgerät 2 in diesem Umgebungsteilbereich 6, 7, 9 starten kann.

Des Weiteren kann der Start der Bodenbearbeitung durch das zweite Bodenbearbeitungsgerät 2 zusätzlich zu den in Anspruch 1 genannten Voraussetzungen von einer Mindestflächengröße eines zu reinigenden Umgebungsteilbereiches 6, 7, 8, 9 abhängig gemacht werden. Wenn das erste Bodenbearbeitungsgerät 1 erst kurz vor der Detektion des zweiten Bodenbearbeitungsgerätes 2 mit einer Reinigung eines Hartbodens begonnen hat, ist es sinnvoll, das Startsignal für eine Bodenbearbeitung des zweiten Bodenbearbeitungsgerätes 2 noch hinauszuzögern, bis eine Mindestfläche von dem ersten Bodenbearbeitungsgerät 1 vorgereinigt, d. h. gesaugt, ist. Es wird somit vorgeschlagen, das zweite Bodenbearbeitungsgerät 2 erst dann zu starten, wenn die Hartbodenfläche, die das erste Bodenbearbeitungsgerät 1 bereits bearbeitet hat, eine Mindestflächengröße aufweist oder gar vollständig gereinigt wurde. Dies bedeutet gleichzeitig, dass derjenige Umgebungsteilbereich 6, 7, 8, 9 dann auch vollständig kartiert werden konnte. Wenn eine Hartbodenfläche zur Reinigung durch das zweite Bodenbearbeitungsgerät 2 freigegeben ist, startet die Recheneinrichtung 12 des zweiten Bodenbearbeitungsgerätes 2 eine Bodenbearbeitungstätigkeit durch das zweite Bodenbearbeitungsgerät 2. Ein Startort für die Bodenbearbeitungstätigkeit des zweiten Bodenbearbeitungsgerätes 2 wird vorzugsweise so festgelegt, dass sich eine kürzeste Entfernung zwischen einem aktuellen Aufenthaltsort des zweiten Bodenbearbeitungsgerätes 2 und den zu reinigenden Umgebungsteilbereichen 6, 7, 9 beziehungsweise zu der geplanten Fortbewegungsroute 10 des zweiten Bodenbearbeitungsgerätes 2 ergibt. Wenn das erste Bodenbearbeitungsgerät 1 vor dem Start des zweiten Bodenbearbeitungsgerätes 2 mehr als eine auch durch das zweite Bodenbearbeitungsgerät 2 zu reinigende Hartbodenfläche, hier die Umgebungsteilbereiche 6, 7, 9, gereinigt hat, wird eine kürzest mögliche Fortbewegungsroute 10 für das zweite Bodenbearbeitungsgerät 2 geplant, die alle zu reinigenden Umgebungsteilbereiche 6, 7, 9 enthält. Damit wird gleichzeitig festgelegt, in welcher Reihenfolge das zweite Bodenbearbeitungsgerät 2 die Umgebungsteilbereiche 6, 7, 9 reinigt. Die Fortbewegungsroute 10 des zweiten Bodenbearbeitungsgerätes 2 muss somit nicht identisch mit der Fortbewegungsroute 5 des ersten Bodenbearbeitungsgerätes 1 sein. Somit kann gleichzeitig auch eine benötigte Zeitspanne und Energiemenge für die Bodenbearbeitung durch das zweite Bodenbearbeitungsgerät 2 möglichst gering gehalten werden. Die Fortbewegungsroute 10 für das zweite Bodenbearbeitungsgerät 2 wird vorteilhaft dann verändert bzw. ergänzt, wenn sich auch die Fortbewegungsroute 5 des ersten Bodenbearbeitungsgerätes 1 ändert bzw. ergänzt und Umgebungsteilbereiche 6, 7, 8, 9 betrifft, die ebenfalls durch das zweite Bodenbearbeitungsgerät 2 gereinigt werden sollen.

In dem Fall, dass das erste Bodenbearbeitungsgerät 1 während seiner Bodenbearbeitungstätigkeit gar kein anderes Bodenbearbeitungsgerät 2 detektiert, beendet das erste Bodenbearbeitungsgerät 1 seine Bodenbearbeitungstätigkeit nach Plan und übermittelt eine Information über seine erfolgreiche Bodenbearbeitung an beispielsweise eine externe Recheneinrichtung 3 oder andere Bodenbearbeitungsgeräte 1, 2, die dem ersten Bodenbearbeitungsgerät 1 innerhalb des Systems bekannt sind. Ein zweites Bodenbearbeitungsgerät 2 kann daraufhin eine eigene Bodenbearbeitungstätigkeit durchführen, wobei allerdings nicht die erste Umgebungskarte 4 des ersten Bodenbearbeitungsgerätes 1 mit einer darin verzeichneten Position des zweiten Bodenbearbeitungsgerätes 2 zur Verfügung steht. Vielmehr muss das zweite Bodenbearbeitungsgerät 2 eine eigene Umgebungskarte 4 erstellen, wozu die eigene Detektionseinrichtung 11 des zweiten Bodenbearbeitungsgerätes 2 genutzt wird. Insbesondere kann das erste Bodenbearbeitungsgerät 1 nach erfolgreichem Beenden seiner Bodenbearbeitungstätigkeit eine Statusbenachrichtigung an eine sogenannte Cloud senden, mittels welcher wiederum das zweite Bodenbearbeitungsgerät 2 eine Information über die beendete Bodenbearbeitungstätigkeit des ersten Bodenbearbeitungsgerätes 1 erlangt und eine eigene Bodenbearbeitungstätigkeit starten kann. Da das zweite Bodenbearbeitungsgerät 2 bei Start seiner Bodenbearbeitungstätigkeit somit keine Kenntnis über die Umgebungskarte 4 hat und auch keine Kenntnis über bestimmte Bodenarten in Umgebungsteilbereichen 6, 7, 8, 9 der Umgebung, muss das zweite Bodenbearbeitungsgerät 2 zunächst seine relevanten Informationen über die Umgebung selbst beschaffen.

Die Figur 4 zeigt schließlich eine weitere mögliche Ausführungsform der Erfindung, bei welcher die Bodenbearbeitungsgeräte 1, 2 nicht direkt, sondern vielmehr über eine externe Recheneinrichtung 3 miteinander kommunizieren. Das erste Bodenbearbeitungsgerät 1 sendet während einer Bodenbearbeitung seine bis dahin erstellte und fortlaufend aktualisierte Umgebungskarte 4 an die externe Recheneinrichtung 3. Die Umgebungskarte 4 wird dort gespeichert und an das zweite Bodenbearbeitungsgerät 2 übermittelt, bzw. zum Abrufen bereitgestellt. Die Umgebungskarte 4 ist somit zentral innerhalb der externen Recheneinrichtung 3 gespeichert und wird dort verwaltet und aktualisiert. Es werden Zusatzinformationen über die in der Umgebungskarte 4 vorhandenen Umgebungsteilbereiche 6, 7, 8, 9 gesammelt und/oder ausgetauscht, so dass die in dem System vernetzten Bodenbearbeitungsgeräte 1, 2 grundsätzlich nur noch Statusinformationen und Flächeninformationen an die Recheneinrichtung 3 übermitteln müssen. Grundsätzlich kann die Recheneinrichtung 3 auch eine geräteübergreifende, d. h. globale, persistente Umgebungskarte 4 aufweisen, in welcher dann durch die Bodenbearbeitungsgeräte 1, 2 detektierte Informationen wie beispielsweise Bodenart, Schmutzmenge, Schmutzart und dergleichen eingetragen werden. Die Bodenbearbeitungsgeräte 1, 2 können auf die in der Recheneinrichtung 3 gespeicherte Umgebungskarte 4 zugreifen, um beispielsweise eine Information über eine aktuelle Position und Orientierung eines anderen Bodenbearbeitungsgerätes 1, 2 zu übermitteln oder zu erlangen.

## Patentansprüche

1. Verfahren zum Betrieb eines Systems mit einem sich selbsttätig fortbewegenden ersten Bodenbearbeitungsgerät (1) und einem sich selbsttätig fortbewegenden zweiten Bodenbearbeitungsgerät (2), wobei das erste Bodenbearbeitungsgerät (1) Umgebungsmerkmale einer Umgebung des ersten Bodenbearbeitungsgerätes (1) detektiert, wobei das erste Bodenbearbeitungsgerät (1) und das zweite Bodenbearbeitungsgerät (2) Datenkommunikationseinrichtungen aufweisen, mittels welcher die Bodenbearbeitungsgeräte (1, 2) miteinander kommunizieren, wobei das erste Bodenbearbeitungsgerät (1) oder eine dem ersten Bodenbearbeitungsgerät (1) und dem zweiten Bodenbearbeitungsgerät (2) gemeinsam zugeordnete Recheneinrichtung (3) anhand der detektierten Umgebungsmerkmale eine erste Umgebungskarte (4) erstellt, und wobei das erste Bodenbearbeitungsgerät (1) des Weiteren das zweite Bodenbearbeitungsgerät (2) detektiert und die Position des zweiten Bodenbearbeitungsgerätes (2) daraufhin innerhalb der erstellten ersten Umgebungskarte (4) gespeichert wird, **dadurch gekennzeichnet, dass** das erste Bodenbearbeitungsgerät (1) seine bis dahin erstellte erste Umgebungskarte (4) an das zweite Bodenbearbeitungsgerät (2) übermittelt, und wobei das zweite Bodenbearbeitungsgerät (2) noch während einer von dem ersten Bodenbearbeitungsgerät (1) ausgeführten ersten Bodenbearbeitungstätigkeit die erste Umgebungskarte (4) und eine Information über eine aktuelle Position des zweiten Bodenbearbeitungsgerätes (2) innerhalb der ersten Umgebungskarte (4) erhält und wobei eine Recheneinrichtung (12) des zweiten Bodenbearbeitungsgerätes (2) auf der Basis der ersten Umgebungskarte (4) und der empfangenen Information über die aktuelle Position des zweiten Bodenbearbeitungsgerätes (2) innerhalb der ersten Umgebungskarte (4) eigenständig eine zweite Bodenbearbeitungstätigkeit steuert.

2. Verfahren nach Anspruch 1, **dadurch gekennzeichnet, dass** das erste Bodenbearbeitungsgerät (1) die erste Umgebungskarte (4) erstellt und direkt an das zweite Bodenbearbeitungsgerät (2) übermittelt.

3. Verfahren nach Anspruch 1 oder 2, **dadurch gekennzeichnet, dass** nach Erstellen der ersten Umgebungskarte (4) und Speichern der Position des zweiten Bodenbearbeitungsgerätes (2) innerhalb der erstellten ersten Umgebungskarte (4) die erste Umgebungskarte (4) und die darin vermerkte Position des zweiten Bodenbearbeitungsgerätes (2) während einer Fortbewegung des ersten Bodenbearbeitungsgerätes (1) fortlaufend aktualisiert werden.

4. Verfahren nach einem der vorhergehenden Ansprüche, **dadurch gekennzeichnet, dass** das erste Bodenbearbeitungsgerät (1) Bodenparameter der Umgebungsteilbereiche (6, 7, 8, 9) der Umgebung, insbesondere eine Bodenart, eine Verschmutzungsart und/oder einen Verschmutzungsgrad, einen Bearbeitungszustand mittels des ersten Bodenbearbeitungsgerätes (1) bearbeiteter oder nicht bearbeiteter Umgebungsteilbereiche (6, 7, 8, 9) und/oder eine Fortbewegungsroute (5) des ersten Bodenbearbeitungsgerätes (1) durch einen oder mehrere Umgebungsteilbereiche (6, 7, 8, 9) detektiert und in der ersten Umgebungskarte (4) speichert, oder detektiert und an die gemeinsame Recheneinrichtung (3) übermittelt.

5. Verfahren nach einem der vorhergehenden Ansprüche, **dadurch gekennzeichnet, dass** die zweite Bodenbearbeitungstätigkeit an einem Ort auf einer Fortbewegungsroute (5) des ersten Bodenbearbeitungsgerätes (1) durchgeführt wird.

6. Verfahren nach Anspruch 5, **dadurch gekennzeichnet, dass** die zweite Bodenbearbeitungstätigkeit des zweiten Bodenbearbeitungsgerätes (2) in einem bestimmten Umgebungsteilbereich (6, 7, 8, 9) erst dann durchgeführt wird, wenn in diesem Umgebungsteilbereich (6, 7, 8, 9) zuvor eine erste Bodenbearbeitungstätigkeit durch das erste Bodenbearbeitungsgerät (1) durchgeführt wurde, und/oder nur dann durchgeführt wird, wenn das zweite Bodenbearbeitungsgerät (2) für eine Bodenbearbeitung dieses Umgebungsteilbereiches (6, 7, 8, 9) geeignet ist.

7. Verfahren nach einem der vorhergehenden Ansprüche, **dadurch gekennzeichnet, dass** das erste Bodenbearbeitungsgerät (1) in dem Fall, dass das erste Bodenbearbeitungsgerät (1) das zweite Bodenbearbeitungsgerät (2) während der Ausführung der ersten Bodenbearbeitungstätigkeit nicht detektieren konnte, nach Beendigung der ersten Bodenbearbeitungstätigkeit eine Statusnachricht über die beendete erste Bodenbearbeitungstätigkeit an das zweite Bodenbearbeitungsgerät (2) und/oder die gemeinsame Recheneinrichtung (3) übermittelt.

8. Verfahren nach Anspruch 7, **dadurch gekennzeichnet, dass** das zweite Bodenbearbeitungsgerät (2) die Statusnachricht empfängt und daraufhin eine zweite Bodenbearbeitungstätigkeit startet.

9. Verfahren nach Anspruch 7 oder 8, **dadurch gekennzeichnet, dass** das zweite Bodenbearbeitungsgerät (2) selbst Umgebungsmerkmale der Umgebung detektiert, anhand der detektierten Umgebungsmerkmale eine zweite Umgebungskarte erstellt und die zweite Bodenbearbeitungstätigkeit auf der Basis der zweiten Umgebungskarte ausführt.

10. System mit einem ersten Bodenbearbeitungsgerät (1) und einem zweiten Bodenbearbeitungsgerät (2), **dadurch gekennzeichnet, dass** das System zur Durchführung eines Verfahrens gemäß einem der vorhergehenden Ansprüche ausgebildet ist.

## Claims

1. A method for operating a system with a first automatically moving floor processing device (1) and a second automatically moving floor processing device (2), wherein the first floor processing device (1) detects environmental features in an environment of the first floor processing device (1), wherein the first floor processing device (1) and the second floor processing device (2) comprise data communication means by means of which the floor processing devices (1, 2) communicate with each other, wherein the first floor processing device (1) or a shared computing device (3) allocated to both the first floor processing device (1) and the second floor processing device (2) generates a first area map (4) based on the detected environmental features, and wherein the first floor processing device (1) also detects the second floor processing device (2), and the position of the second floor processing device (2) is thereupon stored within the generated first area map (4), **characterized in that** the first floor processing device (1) transmits its first area map (4) created up to that point to the second floor processing device (2), and wherein the second floor processing device (2) receives the first area map (4) and information about a current position of the second floor processing device (2) within the first area map (4) already during a first floor processing activity performed by the first floor processing device (1), and wherein a control device (12) of the second floor processing device (2) controls a second floor processing activity independently on the basis of the first area map (4) and the received information about the current position of the second floor processing device (2) within the first area map (4).

2. The method according to claim 1, **characterized in that** the first floor processing device (1) generates the first area map (4) and transmits it directly to the second floor processing device (2).

3. The method according to claim 1 or 2, **characterized in that** after creating the first area map (4) and storing the position of the second floor processing device (2) within the created first area map (4) the first area map (4) and the position of the second floor processing device (2) noted therein are continuously updated during a movement of the first floor processing device (1).

4. The method according to one of the preceding claims, **characterized in that** first floor processing device (1) detects floor parameters of the partial environmental areas (6, 7, 8, 9) of the environment, in particular a floor type, a contamination type and/or a contamination level, an operating state of partial environmental areas (6, 7, 8, 9) processed or not processed by the first floor processing device (1) and/or a movement route (5) of the first floor processing device (1) through one or several partial environmental areas (6, 7, 8, 9), and stores them in the first area map (4), or detects the latter and transmits them to the shared computing device (3).

5. The method according to one of the preceding claims, **characterized in that** the second floor processing activity is performed at a location on a movement route (5) of the first floor processing device (1).

6. The method according to claim 5, **characterized in that** the second floor processing activity of the second floor processing device (2) is only performed in a specific partial environmental area (6, 7, 8, 9) if a first floor processing activity was performed in this partial environmental area (6, 7, 8, 9) beforehand by the first floor processing device (1), and/or is only performed if the second floor processing device (2) is suitable for processing the floor of this partial environmental area (6, 7, 8, 9).

7. The method according to one of the preceding claims, **characterized in that**, in a case where the first floor processing device (1) could not detect the second floor processing device (2) while performing the first floor processing activity, the completion of the first floor processing activity is followed by the first floor processing device (1) transmitting a status message about the completed first floor processing activity to the second floor processing device (2) and/or the shared computing device (3).

8. The method according to claim 7, **characterized in that** the second floor processing device (2) receives the status message and thereupon starts a second floor processing activity.

9. The method according to claim 7 or 8, **characterized in that** the second floor processing device (2) detects environmental features in the environment itself, generates a second area map based on the detected environmental features, and performs the second floor processing activity based on the second area map.

10. A system with a first floor processing device (1) and a second floor processing device (2), **characterized in that** the system is designed for implementing a method according to one of the preceding claims.

## Revendications

1. Procédé de fonctionnement d'un système comprenant un premier appareil de traitement du sol (1) se déplaçant automatiquement et un deuxième appareil de traitement du sol (2) se déplaçant automatiquement, dans lequel le premier appareil de traitement du sol (1) détecte des caractéristiques d'environnement d'un environnement du premier appareil de traitement du sol (1), dans lequel le premier appareil de traitement du sol (1) et le deuxième appareil de traitement du sol (2) présentent des dispositifs de communication de données au moyen desquels les appareils de traitement du sol (1, 2) communiquent entre eux, dans lequel le premier appareil de traitement du sol (1) ou un dispositif de calcul (3) associé en commun au premier appareil de traitement du sol (1) et au deuxième appareil de traitement du sol (2) établit une première carte d'environnement (4) à l'aide des caractéristiques d'environnement détectées, et dans lequel le premier appareil de traitement du sol (1) détecte en outre le deuxième appareil de traitement du sol (2) et à la suite de quoi la position du deuxième appareil de traitement du sol (2) est enregistrée à l'intérieur de la première carte d'environnement (4) établie, **caractérisé en ce que** le premier appareil de traitement du sol (1) transmet sa première carte d'environnement (4) établie jusqu'alors au deuxième appareil de traitement du sol (2), et dans lequel le deuxième appareil de traitement du sol (2) reçoit la première carte d'environnement (4) et une information sur une position actuelle du deuxième appareil de traitement du sol (2) à l'intérieur de la première carte d'environnement (4) pendant une première opération de traitement du sol effectuée par le premier appareil de traitement du sol (1) et dans lequel un dispositif de calcul (12) du deuxième appareil de traitement du sol (2) commande de manière autonome une deuxième opération de traitement du sol sur la base de la première carte d'environnement (4) et de l'information reçue concernant la position actuelle du deuxième appareil de traitement du sol (2) à l'intérieur de la première carte d'environnement (4).

2. Procédé selon la revendication 1, **caractérisé en ce que** le premier appareil de traitement du sol (1) établit la première carte d'environnement (4) et la transmet directement au deuxième appareil de traitement du sol (2).

3. Procédé selon la revendication 1 ou 2, **caractérisé en ce que**, après avoir établi la première carte d'environnement (4) et enregistré la position du deuxième appareil de traitement du sol (2) à l'intérieur de la première carte d'environnement (4) établie, la première carte d'environnement (4) et la position du deuxième appareil de traitement du sol (2) qui y est notée sont mises à jour en continu pendant un déplacement du premier appareil de traitement du sol (1).

4. Procédé selon l'une des revendications précédentes, **caractérisé en ce que** le premier appareil de traitement du sol (1) détecte et enregistre dans la première carte d'environnement ou détecte et transmet au dispositif de calcul commun (3), des paramètres de sol de zones partielles d'environnement (6, 7, 8, 9) de l'environnement, en particulier un type de sol, un type de salissure et/ou un degré de salissure, un état de traitement de zones partielles d'environnement (6, 7, 8, 9) traitées ou non traitées au moyen du premier appareil de traitement du sol (1) et/ou un itinéraire de déplacement (5) du premier appareil de traitement du sol (1) à travers une ou plusieurs zones partielles d'environnement (6, 7, 8, 9).

5. Procédé selon l'une des revendications précédentes, **caractérisé en ce que** la deuxième opération de traitement du sol est réalisée en un lieu situé sur un itinéraire de déplacement (5) du premier appareil de traitement du sol (1).

6. Procédé selon la revendication 5, **caractérisé en ce que** la deuxième opération de traitement du sol du deuxième appareil de traitement du sol (2) n'est effectuée dans une zone partielle déterminée de l'environnement (6, 7, 8, 9) que si une première opération de traitement du sol a été effectuée auparavant dans cette zone partielle de l'environnement (6, 7, 8, 9) par le premier appareil de traitement du sol (1), et/ou n'est effectuée que si le deuxième appareil de traitement du sol (2) est adapté à un traitement du sol de cette zone partielle de l'environnement (6, 7, 8, 9).

7. Procédé selon l'une des revendications précédentes, **caractérisé en ce que**, dans le cas où le premier appareil de traitement du sol (1) n'a pas pu détecter le deuxième appareil de traitement du sol (2) pendant l'exécution de la première opération de traitement du sol, le premier appareil de traitement du sol (1) transmet, une fois la première opération de traitement du sol terminée, un message d'état de la première opération de traitement du sol terminée au deuxième appareil de traitement du sol (2) et/ou au dispositif de calcul commun (3).

8. Procédé selon la revendication 7, **caractérisé en ce que** le deuxième appareil de traitement du sol (2) reçoit le message d'état et à la suite de quoi démarre une deuxième opération de traitement du sol.

9. Procédé selon la revendication 7 ou 8, **caractérisé en ce que** le deuxième appareil de traitement du sol (2) détecte lui-même des caractéristiques d'environnement de l'environnement, établit une deuxième carte d'environnement à l'aide des caractéristiques d'environnement détectées et effectue la deuxième opération de traitement du sol sur la base de la deuxième carte d'environnement.

10. Système comprenant un premier appareil de traitement du sol (1) et un deuxième appareil de traitement du sol (2), **caractérisé en ce que** le système est conçu pour mettre en œuvre un procédé selon l'une des revendications précédentes.
